# EUROPEAN PATENT APPLICATION

(11) **EP 0 605 238 A1**
(43) Date of publication of application: **06.07.1994**
(21) Application number: 93310561.1
(22) Date of filing: 24.12.1993
(51) Int. Cl.: G11B 20/10, H04N 5/92

(54) **Recorded information reproducing apparatus**

(30) Priority: 28.12.1992 JP 348964/92
(71) Applicant: PIONEER ELECTRONIC CORPORATION, Meguro-ku Tokyo (JP); HUDSON SOFT CO., LTD., Sapporo-city, Hokkaido (JP)
(72) Inventor: Takeya, Noriyoshi, c/o Pioneer Tokorozawa Plant, Tokorozawa-City, Saitama (JP); Okada, Setsuo, Sapporo-city, Hokkaido (JP)
(74) Representative: Tomlinson, Kerry John

(57) **Abstract**

A reproducing apparatus for reading a recording signal including both of an analog information signal and a digital information signal recorded on a recording medium (1) from the recording medium and for individually reproducing each of the information signals. In the re-reading operation to correctly reproduce the digital information signal, analog sub-information signal of the contents different from those of the analog information signal reproduced by the reading operation at the first time is generated. By this operation, a situation such that the same information is continuously reproduced and generated at the time of the re-reading operation is prevented, so that a fact that the apparatus is normally operating can be recognized by the user.

## Description

The invention relates to a reproducing apparatus for reading out from a recording medium a recorded signal including both an analog information signal and a digital information signal which are recorded on the recording medium, and individually reproducing each of the information signals.

A disk such as LD-ROM, CD-ROM, or the like is known as a recording medium on which digital data (digital information signal) such as a program or the like is recorded in addition to video information and audio information. Since the digital data will become quite different information when it has an error of only one bit, in an apparatus for playing those disks, an error detection is also executed when reproducing desired digital data from the read signal obtained from the disk. When the error detection is confirmed, an error correction is executed. There is, however, a case where the error correction cannot be perfectly performed in dependence on the degree of error and the data must be again read out from the disk.

In the case of a disk such as an LD-ROM in which analog video information, analog audio information, and digital data are multiplex recorded, when reading out the data once again, not only the digital data but also the analog video information and the analog audio information are obtained by the re-reading operation from the disk. This causes a situation that the same video image and audio are repetitively generated until desired digital data is correctly reproduced.

Therefore, a drawback was that the user of the apparatus can misunderstand such a repeating operation as being caused by a malfunction of the apparatus since the general user cannot understand that such a repeating operation is performed to reproduce the digital data without errors . Even if the user knows the operation of the apparatus, an unpleasant feeling can still be given to the user.

It is, therefore, an object of the invention to provide a recording information reproducing apparatus which enables the user to understand that the apparatus normally operates when executing the reading operation once again to correctly reproduce desired digital data.

According to the invention, there is provided a recorded information reproducing apparatus for reading from a recording medium a recorded signal including both an analog information signal and a digital information signal recorded on the recording medium and for individually reproducing each of the information signals, comprising: means for detecting a reproduction error of a reproduced digital information signal and generating an error detection signal; reading means for again reading a recording signal in accordance with the error detection signal; sub-information generating means for generating an analog sub-information signal; and output switching means for generating the analog sub-information signal in place of the reproduced analog information signal during the rereading operation of the reading means.

In the recording information reproducing apparatus of the invention, when reading data once again, the apparatus produces the analog sub-information signal of the contents different from those of the analog information signal which was reproduced by the reading operation at the first time.

A number of preferred embodiments of the present invention will now be described by way of example only and with reference to the accompanying drawings, in which:-
Fig. 1 is a block diagram showing an embodiment of the present invention;
Fig. 2 is a diagram showing a format of a subcode Q signal;
Fig. 3 is a flowchart showing the operation of a game CPU of the apparatus;
Fig. 4 is a flowchart showing the operation of a main body CPU of the apparatus;
Fig. 5 is a block diagram showing another embodiment of the invention;
Fig. 6 is a flowchart showing the operation of the main body CPU in the embodiment of Fig. 5; and
Fig. 7 is a diagram showing a display example according to a video output during the re-reading operation.

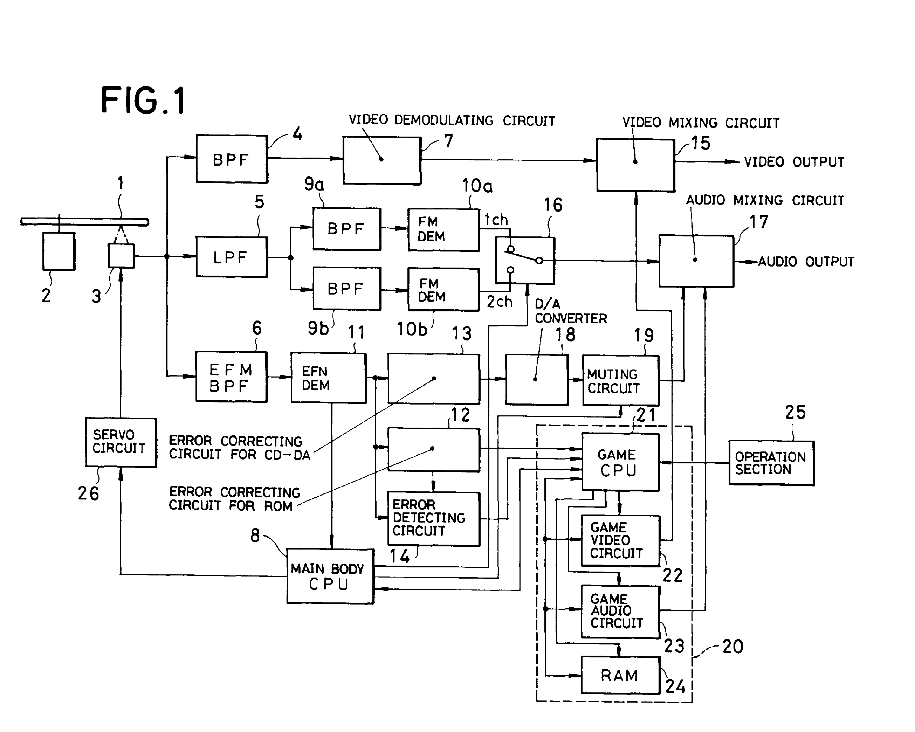

Fig. 1 shows a video gaming apparatus to which a recording information reproducing apparatus of the invention is applied. In the apparatus, a disk called an LD-ROM in which an analog video signal, analog audio signal of two channels, and a digital data signal have been frequency multiplex recorded is used as a disk. The analog video signals indicate, for example, a background video image or the like of a graphics video image which is formed from digital data, which will be explained hereinafter. The first channel in the two channels denotes a main audio signal indicative of a narration or background sound in a game and the second channel denotes a sub-audio signal also indicating that the data is being read in addition to the contents of the first channel. The digital data (game data) signal indicates, for example, in addition to a game program, graphics video data such as characters, letters or the like and audio data such as an effective sound or the like. The analog video signal and audio signal are FM signals which are frequency- modulated. The digital data signal is an EFM signal which is EFM- (Eight to Fourteen Modulation) modulated. A disk 1 is rotated by a spindle motor 2 and its recording information is read by a pickup 3; An RF (radio frequency) signal as a read output of the pickup 3 is supplied to a band pass filter (BPF) 4 for a video signal, a low pass filter (LPF) 5 for an analog audio signal; and a band pass filter6 for an EFM data signal.

A pass band of the BPF 4 is set in correspondence to a frequency band (for example, 3.5 to 15 MHz) which is occupied by a carrier channel of an FM video signal. The FM video signal which passed through the BPF 4 is supplied to a video demodulating circuit 7 and is demodulated by the video demodulating circuit 7, so that a video signal is derived. The video signal is transmitted through a video mixing circuit 15.

The passing signal of the LPF 5 is separated into FM audio signals of two channels by band pass fi Iters (BPFs) 9a and 9b for allowing only the audio carrier components of 2.3 MHz and 2.8 MHz to pass. The FM audio signals are demodulated by FM demodulating circuits 10a and 10b and become audio outputs of two channels. Achange-over switch 16 is provided for outputs of the FM demodulating circuits 10a and 10b. Either one of the demodulated audio signals of two channels is selectively transmitted from the switch 16 and supplied to an audio mixing circuit 17.

On the other hand, for example, the EFM signal separated from the reproduction RF signal by the BPF 6 for the digital EFM signal for allowing the signal of 2 MHz or less to pass is demodulated by an EFM demodulating circuit 11 and becomes a data output. The data output is supplied to an error correcting circuit 12 for a ROM, an error correcting circuit 13 for a CD-DA (PCM audio data based on the standard of a compact disc exclusively for a general audio), and an error detecting circuit 14. The error correcting circuit 12 forthe ROM is a circuit for performing an error correction with respect to game data which is supplied from the EFM demodulating circuit 11. When the error correction can be performed, the data after completion of the correction is supplied to a CPU 21, which will be explained hereinafter. When the error correction is impossible, an error flag indicative of the uncorrectable error is generated without transmitting the data. The error correcting circuit 13 forthe CD-DA is a circuit to execute an error correction with respect to the digital audio data which is supplied from the EFM demodulating circuit 11. The error detecting circuit 14 is a circuit for detecting, from the error flag, a fact that the errors is not correctly corrected by the error correcting circuit 12 with regard to the game data which is supplied from the EFM demodulating circuit 11. Adetection output of the error detecting circuit 14 is supplied to the CPU 21. A D/Aconverter 18 is connected to an output of the error correcting circuit 13. The D/A converter 18 converts PCM audio data into an analog audio signal. An output signal of the D/A converter 18 is supplied to the audio mixing circuit 17 through a muting circuit 19.

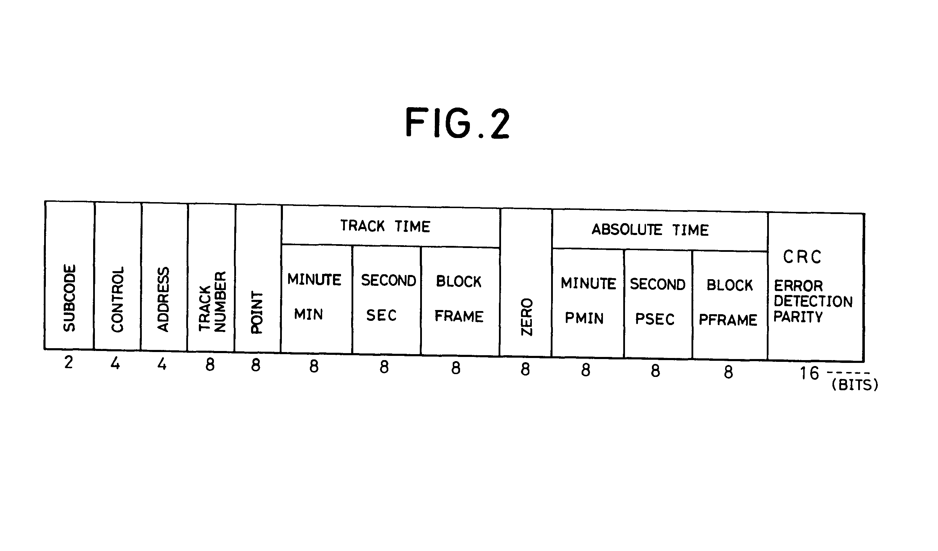

In case of using an LD-ROM as a disk 1, identification (ID) information indicating that the LD-ROM includes a digital EFM signal is included in TOC (Table Of Contents) information which has been recorded as a subcode Q in a lead-in area. Aformat of the subcode Q signal forming the TOC information is as shown in, for example, Fig. 2 in one subcode frame (98 frames). Such a format will now be briefly explained. The format starts from a subcode synchronous portion of the frames 0 and 1 and when a subsequent control portion comprising four bits is equal to "0101' or "0110", it indicates that the disk 1 is an LD-ROM. A point portion of 8 bits indicates the meanings of the next absolute time PMIN, PSEC, and PFRAME. For instance, when the point portion is equal to "00000001", it indicates the start time of the track number 1. The track time MIN, SEC, and FRAME indicates the time in each track on the disk 1. The TOC information is separated by the EFM demodulating circuit 11 and supplied to a main body CPU 8. The CPU 8 instructs and controls the operations including the operation of a servo circuit 26 of a main body disk player in accordance with various kinds of commands from the CPU 21.

A game block 20 is connected to an output of the error correcting circuit 12 for the ROM. The game clock 20 comprises: the game CPU 21 having therein an ROM (not shown) in which a fundamental program to execute a game program has previously been stored; a game video circuit 22; a game audio circuit 23; and an RAM 24. The CPU 21 receives the error corrected data from the error correcting circuit 12 and controls the game video circuit 22, game audio circuit 23, and RAM 24 in accordance with a fundamental program for controlling the game information stored in the internal ROM and with the operation of an operation section 25, which will be explained hereinafter, and also supplies the data to the circuits 22, 23, and 24. For this purpose, the CPU 21, game video circuit 22, game audio circuit 23, and RAM 24 are mutually connected by a common data bus. Control signal lines from the CPU 21 are individually connected to the game video circuit 22, game audio circuit 23, and RAM 24.

Commands and data are, further, exchanged between the CPU 21 and the CPU 8. Graphics video data is supplied from the CPU 21 to the game video circuit 22. The game video circuit 22 converts the supplied graphics video data into the analog graphics video signal in accordance with a control signal and supplies to the video mixing circuit 15. The video mixing circuit 15 has a superimposing function to mix the graphics video signal to the video signal transmitted from the video demodulating circuit 7. The mixed video signal is supplied to a CRT display (not shown). The audio data is supplied from the CPU 21 to the game audio circuit 23. The game audio circuit 23 converts the supplied audio data into the analog audio signal in accordance with a control signal and supplies to the audio mixing circuit 17. The audio mixing circuit 17 simply adds each of the supplied audio signals, thereby mixing them.

The operating section 25 is connected to the CPU 21. The operating section 25 has a start key, a cursor key, and the like to progress a game.

In the apparatus according to the invention as mentioned above, the operation in a game playing mode will now be described. It is now assumed that the disk 1 has already been loaded to a predetermined position.

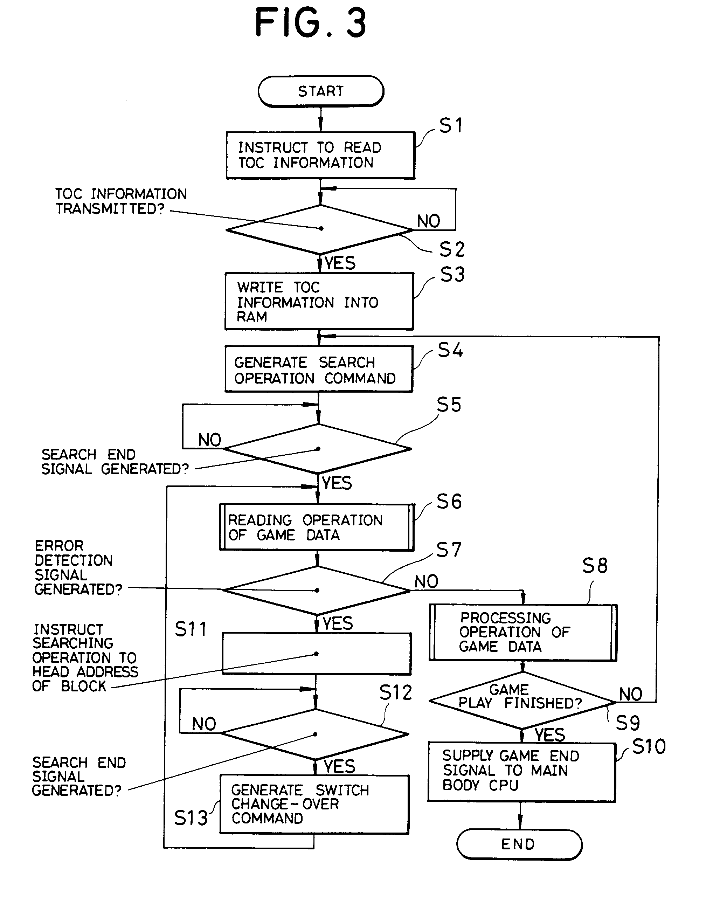

When the start key of the operating section 25 is operated, since a game start command is supplied from the operating section 25 to the CPU 21, the CPU 21 instructs the CPU 8 to read the TOC information as shown in Fig. 3 (step S1).

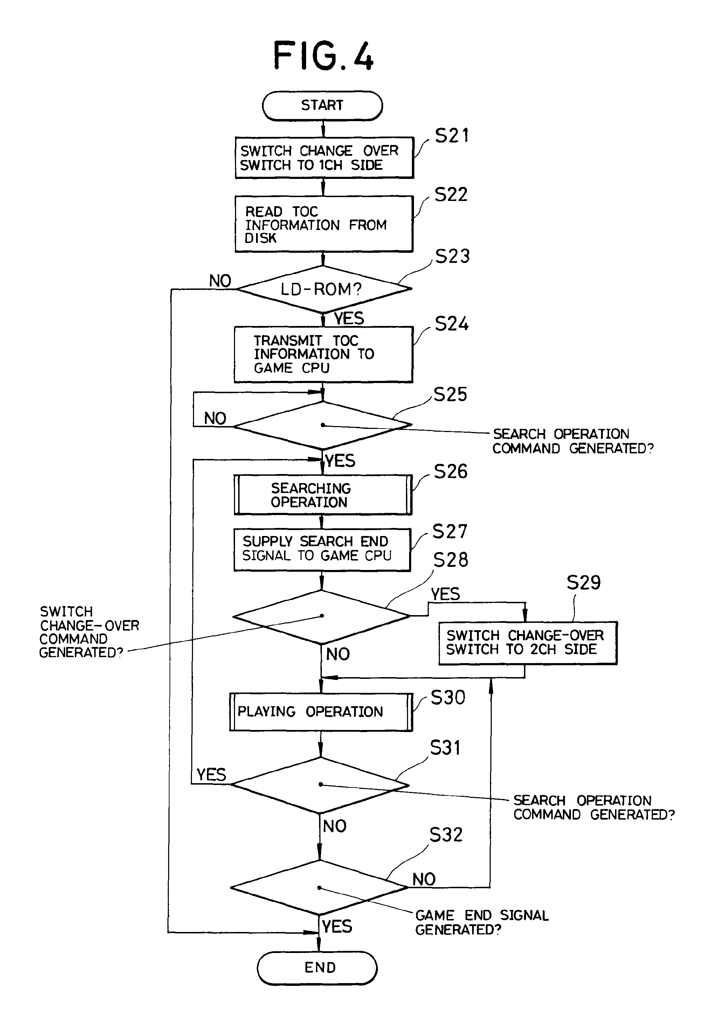

As shown in Fig. 4, the CPU 8 first switches and controls the change-over switch 16 to the first channel (1ch) selection in response to the TOC information read command (step S21) and reads the TOC information from the lead-in area of the disk 1 (step S22). From the read TOC information, a check is made to see if the disk 1 is the LD-ROM or not (step S23). In this instance, when the control portion of 4 bits in the TOC information is equal to "0101" or "0110" as mentioned above, it is determined that the disk 1 is the LD-ROM. In case of a code other than them, it is decided that the disk 1 is not the LD-ROM. When the disk 1 is not the LD-ROM, since the game cannot be started, the current processing routine is finished. When the disk 1 is the LD-ROM, the read TOC information is transferred to the CPU 21 of the game block 20 (step S24).

The CPU 21, on the other hand, judges whether the TOC information has been transferred from the CPU 8 or not. If YES, the TOC information which is transmitted to the RAM 24 is written (step S3) therein. The initial address in which the data to be read first is recorded is set to a designation address and a search operation command is generated (step S4). The initial address is an address which has been predetermined by a producer of the software. It is also possible to previously record the initial address into a data area just after the TOC information and to read it on the CPU 8 side, thereby obtaining the address to be searched. After the generation of the search operation command, a check is made to see if a search end signal has been supplied or not (step S5).

After execution of step S24, the CPU 8 discriminates whether the search operation command has been generated or not (step S25). When the search operation command is supplied, the searching operation to the designated address is executed (step S26). After completion of the searching operation to the designated address, the search end signal is generated to the CPU 21 (step S27).

When it is judged in step S5 that the search end signal has been supplied, the CPU 21 executes the reading operation of the game data (step S6). In the reading operation of the game data, the CPU 21 first generates a game data reading command to the CPU 8. In response to the game data reading command, the CPU 8 plays the disk in step S30 and reads the game data from the disk 1 by the pickup 3 and transfers the game data to the CPU 21 through the filter 6, EFM demodulating circuit 11, and error correcting circuit 12. When the game data is transferred from the CPU 8, the CPU 21 writes the game data into the RAM 24. After completion of the reading operation of the game data, the CPU 21 judges whether an error detection signal has been generated from the error detecting circuit 14 or not (step S7). If NO, the game data which has been read is processed (step S8). During the processing operation of the game data, the CPU 8 checks whether a search operation command has been generated from the CPU 21 or not (step S31). If YES, the searching operation is executed (step S26). During the processing operation of the game data, the CPU 8 discriminates whether a game end signal has been generated from the CPU 21 or not (step S32). If NO, the playing operation is executed in response to a play operation command from the CPU 21 (step S30).

In the playing operation, the reading position of the disk 1 is designated from the CPU 21 to the CPU 8. The CPU 8 controls the reading operation of the information from the designated reading position on the disk 1. The video signal component in the read RF signal by the pickup 3 is supplied to the video demodulating circuit 7 through the BPF 4 and is demodulated to the video signal. The audio signal component of the first channel in the read RF signal is converted into the analog audio signal by the LPF 5, BPF 9a, and FM demodulating circuit 10a. The audio signal component of the second channel in the read RF signals is converted into the analog audio signal by the LPF 5, BPF 9b, and FM demodulating circuit 10b. The data signal component in the read RF signal is supplied to the EFM demodulating circuit 11 through the LPF 6 and is demodulated, so that a data output is derived. The data output is error corrected by the error correcting circuit 12 for the ROM and is supplied to the CPU 21. The CPU 21 processes the data in accordance with the game program and a key operation. in the operating section 25 and supplies the graphics video data to the video circuit 22 and supplies the audio data to the game audio circuit 23. The game video circuit 22 converts the video data into the analog graphics video signal. Although the video mixing circuit 15 ordinarily generates the analog video signal which is supplied from the video demodulating circuit 7, when the graphics video signal is generated from the game video circuit 22, however, the video mixing circuit 15 preferentially generates the graphics video signal. Or, a synthesizing ratio between the analog video signal and the graphics video signal is preliminarily added into the game program data, the video mixing circuit 15 is controlled from the game CPU 21, and the analog video signal and graphics video signal are synthesized and generated. The game audio circuit 23 converts the audio data into the analog audio signal. When the digital audio data is generated from the EFM demodulating circuit 11, the data is error corrected by the error correcting circuit 13 and is further converted into analog data by the D/Aconverter 18. Afterthat, the analog signal is supplied to the audio mixing circuit 17 through the muting circuit 19. Whether the muting circuit 19 is set into either one of the signal passing state and the signal shut-off state is controlled by the CPU 8 in accordance with a command from the CPU 21. The audio mixing circuit 17 directly generates the analog audio signal from the switch 16. When the audio signal is generated from the game audio circuit 23 and muting circuit 19, each of the audio signals is mixed and the mixed signal is generated.

After completion of the data processing operation, the CPU 21 judges whether the game play has been finished or not (step S9). The end of the game play can be judged by confirming that the game play is completed in the data process or can be also judged in accordance with an end command from the operating section 25 of the user at the time of the completion or half-way of the game play. When the game play is not finished, step S4 follows. In the case where the game play has been finished, the game end signal is supplied to the CPU 8 (step S10) and the current processing routine is finished.

After execution of step S31, the CPU 8 checks to see if the above game end signal has been supplied or not (step S32). When the game end signal is not supplied from the CPU 21, step S30 follows. When the game end signal is supplied from the CPU 21, the current processing routine is finished.

When it is judged in step S7 that the error detection signal is generated from the error detecting circuit 14, this means that the game data is not correctly read out, so that the CPU 21 sets the head address of the data block into the designation address and generates a search operation command (step S 11). A length of such a data block is set to a time of a few second or more, for example, 2 Mbytes = about 13 seconds in consideration of a time duration such that even in the data re-reading operation, which will be explained hereinafter, the user can identify the contents of the video signal and audio signal. In step S31, the CPU 8 responds to the search operation command. When the searching operation to the head address is finished, the search end signal is generated in step S27. The CPU 21, therefore, judges whether the search end signal has been generated or not in step S12. If YES, the CPU 21 generates a switch change-over command to the CPU 8 (step S13).

After execution of step S27, the CPU 8 checks to see if the switch change-over command has been generated or not (step S28). If NO, step S30 follows and the disk playing operation is executed to reproduce the game data. If YES, the switch 16 is switched to the second channel (2ch) selection (step S29). Step S30 follows.

When the switch 16 is set to the first channel selecting state, the analog audio signal of the first channel generated from the FM demodulating circuit 10a is supplied to the audio mixing circuit 17 through the switch 16. When the switch 16 is set into the second channel selecting state, the analog audio signal of the second channel generated from the FM demodulating circuit 10b is supplied to the audio mixing circuit 17 through the switch 16. The audio mixing circuit 17 directly transmits the audio signal which is selected and relayed by the switch 16. When the audio signal is generated from the game audio circuit 23, both of the audio signals are mixed and transmitted.

As mentioned above, the first channel relates to the main audio signal indicative of a narration or background sound in the game and the second channel relates to the sub-audio signal indicating that the data is being read. In the case where the data is correctly read out from the beginning without any error, the audio signal of the first channel is reproduced and generated. However, in the case where the error detection signal is generated because the data error cannot be corrected in the data reading operation, the audio signal of the second channel is reproduced and generated. Afact that, for instance, the data reading operation is being executed is notified to the user as a voice sound during the data re-reading operation.

The audio signal of the second channel which is generated during the data re-reading operation is not necessarily a signal indicating that the data reading operation is being executed. It is sufficient that the audio signal of the second channel differs from the contents of the audio signal of the first channel.

It is also possible to construct in a manner such that an error detection signal is generated even in the data reading operation at the second time and, in the data reading operation at the third time due to this, the audio signal of the first channel is reproduced and outputted. In the case where the error detection signal is generated many times, the audio signals of the first and second channels can be also alternately reproduced and outputted.

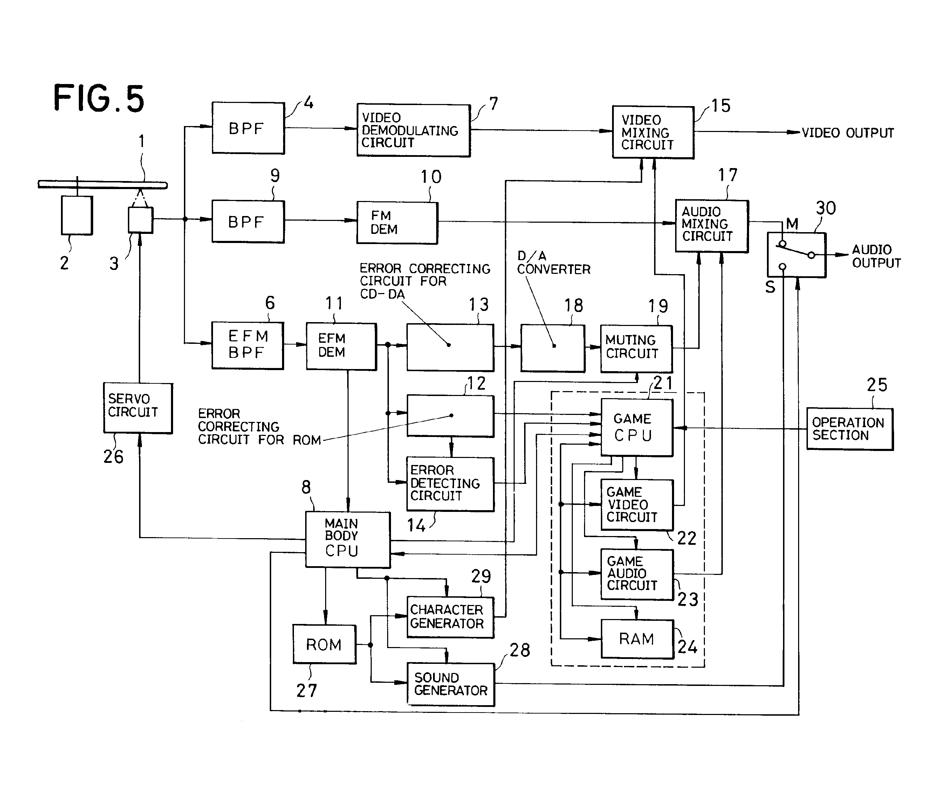

Fig. 5 shows another embodiment of the invention. In Fig. 5, the same portions as those shown in Fig. 1 are designated by the same reference numerals. Only the portions different from those in the apparatus of Fig. 1 will now be described. A ROM 27 is connected to the CPU 8. Audio data and video data to indicate a fact that the data reading operation is being executed by an audio sound and characters have previously been written as digital data in the ROM 27. Each data in the ROM 27 is read out in response to a read command from the CPU 8. The audio data is supplied to a sound generator (SG) 28 and the video data is supplied to a character generator (CG) 29. The sound generator 28 generates an analog sound signal according to the audio data. The character generator 29 generates an analog video signal according to the video data. Generation timings of the audio signal and video signal of the sound generator 28 and character generator 29 are controlled by the CPU 8. The video signal which is generated from the character generator 29 is supplied to the video mixing circuit 15. The audio signal which is generated from the sound generator 28 is supplied to a change-over switch 30. The switch 30 selectively relays and generates either one of the audio signals which are transmitted form the audio mixing circuit 17 and sound generator 28.

Although the audio components of two channels are reproduced from the disk 1, only one channel is shown as a BPF 9 and an FM demodulating circuit 10 in the diagram. The audio signal recorded on the disk 1 of each of the first and second channels is an audio signal indicative of the narration or background sound in the game.

In such an apparatus, the operation at the time of game play will now be described. The CPU 21 executes substantially the same operations as those shown in Fig. 3.

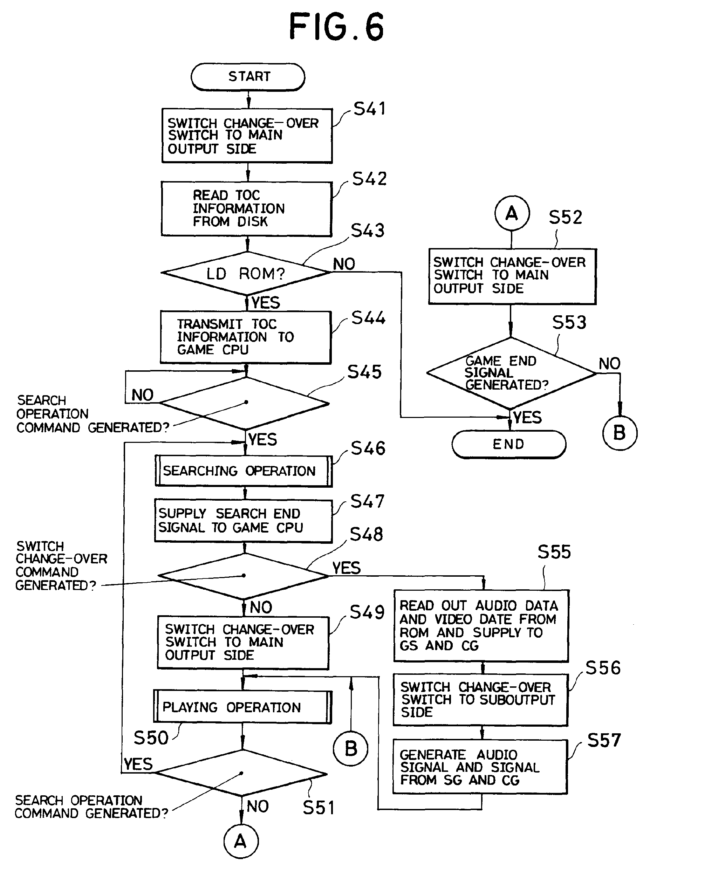

When the start key in the operating section 25 is operated, a game start command is supplied from the operation section 25. Therefore, the reading operation of the TOC information is instructed to the CPU 8 in step S1. In response to the TOC information reading command, the CPU 8 first switches and controls the change-over switch 30 to the main output (M) side selection (step S41) as shown in Fig. 6. As an audio output, the apparatus is in a state in which each of the audio signals read out and reproduced from the disk 1 is obtained. After execution of step S41, the processes in steps S42 to S47 are the same as those in steps S22 to S27 in Fig. 4. The processes in steps S50 and S51 are the same as those in steps S30 and S31 in Fig. 4.

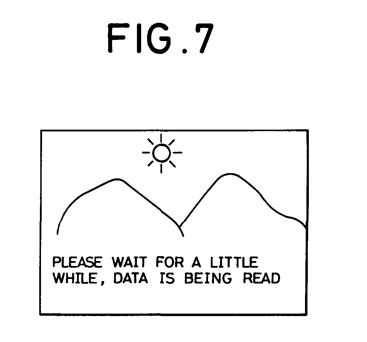

After execution of step S47, the CPU 8 judges whether a switch change-over command has been generated or not (step S48). If NO, the processing routine advances to step S49 and step S50 and the reproducing operation of the game data is executed. Step S49 relates to the operation to switch the switch 30 to the main output side in a manner similar to step S41. In the case where an error detection signal is generated because the data error cannot be corrected in the data reading operation, a switch change-over command is generated in step S13. In this case, therefore, the audio data and video data are read out from the ROM 27 and are supplied to the sound generator 28 and character generator 29 (step S55). The switch 30 is switched and controlled to the sub-output (S) side selection (step S56). A signal generation command is supplied to the sound generator 28 and character generator 29 (step S57). Due to this, the sound generator 28 generates the analog audio signal according to the audio data. The character generator 29 generates the analog video signal according to the video data. The video mixing circuit 15 preferentially generates the analog video signal from the character generator 29 by the superimposing function. Only the analog audio signal from the sound generator 28 is transmitted through the switch 30. That is, in the case where the error detection signal is generated because the data error cannot be corrected in the data reading operation, the audio signal and video signal indicating that the data reading operation is being executed are generated. As a video image, for example, as shown in Fig. 7, a message indicating that the data reading operation is being executed is displayed by characters. Although the embodiment has been shown and described with respect to the example in which such an error uncorrec- tablestate is notified by both of the characters and sound, it can be also notified by either the characters or sound.

After completion of the reading operation of the game data, when no error detection signal is generated from the error detecting circuit 14, the CPU 21 processes the read game data in step S8 and, during the processing operation of the data, the CPU 8 discriminates whether a search operation command has been generated from the CPU 21 or not (step S51). When the search operation command is supplied, the searching operation is executed in step S46. When the search operation command is not generated in step S51, the switch 30 is switched and controlled to the main output (M) side selection (step S52). Such an operation is an operation to return the switch 30 from the sub-output (S) side to the main output (M) side in the case where the data is correctly read by the data re-reading operation. During the processing operation of the game data, the CPU 8 checks to see if the game end signal has been supplied from the CPU 21 or not (step S53). If NO, the playing operation is executed in accordance with a play.operation command from the CPU 21 (step S50). When the game end signal is supplied from the CPU 21, the current processing routine is finished.

Although the embodiment has been shown and described with respect to the example of the video gaming apparatus using the LD-ROM disk, the invention is not limited to such an example. The invention can be also applied to any other apparatuses so long the apparatus plays the LD-ROM disk.

As mentioned above, in the recording information reproducing apparatus of the invention, the analog sub-information signal of the contents different from those of the analog information signal reproduced by the reading operation at the first time is generated at the time of re-reading operation. A situation such that the same information is continuously reproduced and generated at the time of the re- reading operation to correctly reproduce desired digital data is prevented. The user, consequently, can know that the apparatus is operating normally, and a situation such that unnecessary anxiety is given to the user is avoided.

## Claims

1. A recorded information reproducing apparatus for reading a recorded signal including both an analog information signal and a digital information signal recorded on a recording medium (1) from said recording medium and for individually reproducing each of said information signals, comprising:
means (14) for detecting a reproduction error of said digital information signal reproduced and for generating an error detection signal;
reading means (3) for performing a re- reading operation for said recorded signal in accordance with said error detection signal;
sub-information generating means (96,106; 27,28,29) for generating an analog sub-information signal; and
output switching means (16;30) for outputting said analog sub-information signal in place of said reproduced analog information signal during the re-reading operation of said reading means.

2. An apparatus according to claim 1, wherein said recorded signal is recorded on the recording medium in units of a predetermined size, and said reading means reads a unit of said recorded signal in which the error detection signal has been generated.

3. An apparatus according to claim 1 or 2, wherein said analog sub-information signal is recorded on said recording medium.

4. An apparatus according to claim 1 or 2, further comprising means for storing said analog sub-information signal.
